# EUROPEAN PATENT APPLICATION

(11) **EP 3 848 148 A1**
(43) Date of publication of application: **14.07.2021**
(21) Application number: 19858252.0
(22) Date of filing: 29.08.2019
(51) Int. Cl.: B23K 35/26, B23K 1/00, B60J 1/00, C03C 17/06, C22C 28/00, H05B 3/02, H05B 3/84

(54) **VEHICLE WINDOW GLASS ASSEMBLY**

(30) Priority: 07.09.2018 JP 2018168245
(71) Applicant: Central Glass Company, Limited, Ube-shi, Yamaguchi 755-0001 (JP)
(72) Inventor: SEKI, Kohei, Matsusaka-shi, Mie 515-0001 (JP); HAMADA, Jun, Matsusaka-shi, Mie 515-0001 (JP)
(74) Representative: Mewburn Ellis LLP
(86) International application number: PCT/JP2019/033825
(87) International publication number: WO 2020/050120

(57) **Abstract**

A vehicle window glass assembly according to one embodiment of the present disclosure includes: a vehicle window glass pane with a silver-containing conductor layer of predetermined pattern formed on a main surface of the glass pane; a solder layer made of an indium-containing lead-free solder; a connection terminal connected to the conductor layer via the solder layer; and a power line fixed to the connection terminal. The connection terminal includes: a metal plate having a first main surface joined to the solder layer and a second main surface located opposite to the first main surface; and a fixing part that fixes the power line to the second main surface. The power line extends from the fixing part. A starting point of the power line extending from the fixing part is situated above a region inside a joint region defined by the solder layer and the first main surface.

## Description

### FIELD OF THE INVENTION

The present disclosure relates to a vehicle window glass assembly that includes a vehicle window glass pane, with a conductor layer of predetermined pattern formed on a main surface of the glass pane, and a connection terminal joined to the conductor layer via a lead-free solder.

### BACKGROUND ART

A conductor layer is formed by silver printing etc. on a main surface of a vehicle window glass pane so as to constitute an antenna wire or a heating wire for removing glass fogging. As described in Patent Documents 1 and 2, one surface of the conductor layer is adapted as a solder joint surface; and a connection terminal is provided on the other surface of the conductor layer opposite to the joint surface by soldering a metal plate of the connection terminal to the other surface of the conductor layer. The metal plate member of the connection terminal has a fixing part to which a power line is fixed so that the connection terminal is connected to various elements and power source by the power line through a harness. In Patent Document 2, for example, the connection terminal is of disc shape; and the power line is fixed to a center portion of the disc-shaped connection terminal.

It has been required that the solder materials for soldering are lead-free. In Patent Documents 2 to 9, there are proposed vehicle window glass assemblies using indium-containing lead-free solders that have less influence of stress on glass panes and exhibit flexibilities equivalent to those of lead solders.

More specifically, Patent Document 2 proposes a solder material formed of an alloy containing 30% of tin, 65% of indium, 0.5% of copper and 4.5% of silver (wherein the content of each component is assumed to be expressed in mass%). Patent Document 3 proposes a Sn-In alloy containing 39 to 74 mass% of tin and 26 to 56 mass% of indium. Patent Document 4 proposes an In-Sn alloy containing 66 to 90 mass% of indium, 4 to 25 mass% of tin and 0.5 to 9 mass% of silver and further containing antimony, copper and nickel. Patent Document 5 proposes an In-Sn alloy containing 58 to 62 mass% of indium and 35 to 38 mass% of tin. On the other hand, Patent Document 6 proposes a solder material formed of an indium-tin alloy containing 70 to 86 mass% of indium, 4 to 20 mass% of tin and 1 to 8 mass% of silver and having a solidus temperature of 120°C or higher so that, when the solder material is applied to a glass assembly, the glass assembly can withstand a high temperature of 120°C.

### PRIOR ART DOCUMENTS

### Patent Documents

Patent Document 1: Japanese Translation of PCT International Publication No. 2010-500703
Patent Document 2: U.S. Patent No. 6406337
Patent Document 3: Japanese Laid-Open Patent Publication No. 2014-096198
Patent Document 4: Japanese Translation of PCT International Publication No. 2014-509944
Patent Document 5: Japanese Translation of PCT International Publication No. 2016-500575
Patent Document 6: Japanese Laid-Open Patent Publication No. 2016-052684
Patent Document 7: U.S. Patent No. 6253988
Patent Document 8: Japanese Translation of PCT International Publication No. 2009-504411
Patent Document 9: Japanese Laid-Open Patent Publication No. 2012-91216

### SUMMARY OF THE INVENTION

An indium-containing lead-free solder exhibits flexibility. After the connection terminal is soldered to the conductor layer via a joint of such a lead-free solder and when the resulting vehicle glass window assembly is subjected to a heat cycle test, it is unlikely that defects such as cracking will occur in the glass pane and in the conductor layer. On the other hand, the joint strength of the solder joint is not sufficient in a state that a tensile stress is applied to the solder joint from the power line etc.. In particular, the latter phenomenon is likely to occur in the case where the solder joint between the connection terminal and the conductor layer is provided at one location on the connection terminal and is adjacent to the power line fixing part of the connection terminal as in Patent Document 1.

The vehicle window glass assembly needs to have a quality enough to pass not only a heat cycle test but also a heat soak test according to "DIN EN ISO16750-4-K Section 5.1.2.2". In particular, it is preferable that the vehicle window glass assembly passes a heat soak test defined by the Verband der Automobilindustrie (VDA). The heat soak test defined by the VDA is done by placing the solder joint in a temperature environment of 105°C and pulling the power line connected to the connection terminal with a load of 10 N for 96 hours in a direction perpendicular to the main surface of the glass pane under the application of a voltage of 14 V to the conductor layer. This test is one of standardized heat soak tests carried out under severe conditions.

For the vehicle window glass assembly in which the solder joint is made of an indium-containing lead-free solder, however, it is difficult to pass the heat soak test defined by the VDA. The reason for this is assumed to be that the indium-containing lead-free solder has a low melting point of about 115 to 155°C whereby, when a tensile load is applied to the solder joint in a direction perpendicular to the solder layer in a temperature environment of 105°C, the joint strength of the solder joint is lowered due to creep fatigue of the solder layer. (Herein, the term "creep fatigue" refers to a phenomenon in which a substance is deformed with time under the application of a certain load.)

It is accordingly an object of the present disclosure to provide a vehicle window glass assembly in which a solder joint is made of an indium-containing lead-free solder to join a connection terminal connected to a power line and a conductor layer formed on a main surface of a glass pane such that the solder joint between the connection terminal and the conductor layer is formed at one location on the connection terminal, wherein, by reducing a tensile stress applied to the solder joint on the connection terminal and using the lead-free solder with excellent high-temperature creep resistance, the vehicle window glass assembly prevents a deterioration in the joint strength of the solder joint and has a quality enough to pass a heat soak test defined by the VDA.

According to one aspect of the present disclosure, there is provided a vehicle window glass assembly, comprising:
a vehicle window glass pane with a silver-containing conductor layer of predetermined pattern formed on a glass main surface of the glass pane;
a solder layer made of an indium-containing lead-free solder;
a connection terminal connected to the conductor layer via the solder layer; and a power line fixed to the connection terminal,
wherein the connection terminal comprises: a metal plate having a first main surface joined to the solder layer and a second main surface located opposite to the first main surface; and a fixing part which fixes the power line to the second main surface,
wherein the power line extends from the fixing part,
wherein a starting point of the power line extending from the fixing part (that is, an end of a portion (non-fixed portion) of the power line which extends from the fixing part without being fixed to the connection terminal) is situated above a region inside an edge of a first joint region defined by the solder layer and the first main surface, and
wherein the lead-free solder is a non-eutectic In-Sn alloy which contains indium as a predominant component, comprises 65 mass% to 74 mass% of indium, 3 mass% to 9 mass% of silver and 0 mass% to 2 mass% of each of antimony, copper, nickel and zinc, with the balance being tin and inevitable impurities, and has a solidus temperature of 120°C or higher.

### BRIEF DESCRIPTION OF THE DRAWINGS

FIG. 1 is an alloy phase diagram of an In-Sn solder.
FIG. 2 is a schematic view of a main part of a vehicle window glass assembly according to one typical embodiment of the present disclosure.
FIG. 3 is a detailed schematic view of a connection terminal.
FIG. 4 is a schematic view of a connection terminal according to a derivative example.
FIG. 5 is a schematic view of a connection terminal according to a first comparative example.
FIG. 6 is a schematic view of a connection terminal according to a second comparative example.
FIG. 7 is a schematic cross-sectional view of the vehicle window glass assembly as taken along line A-B of FIG. 2.

### DETAILED DESCRIPTION OF THE EMBODIMENTS

Hereinafter, embodiments of the present disclosure will be described below with reference to the drawings.

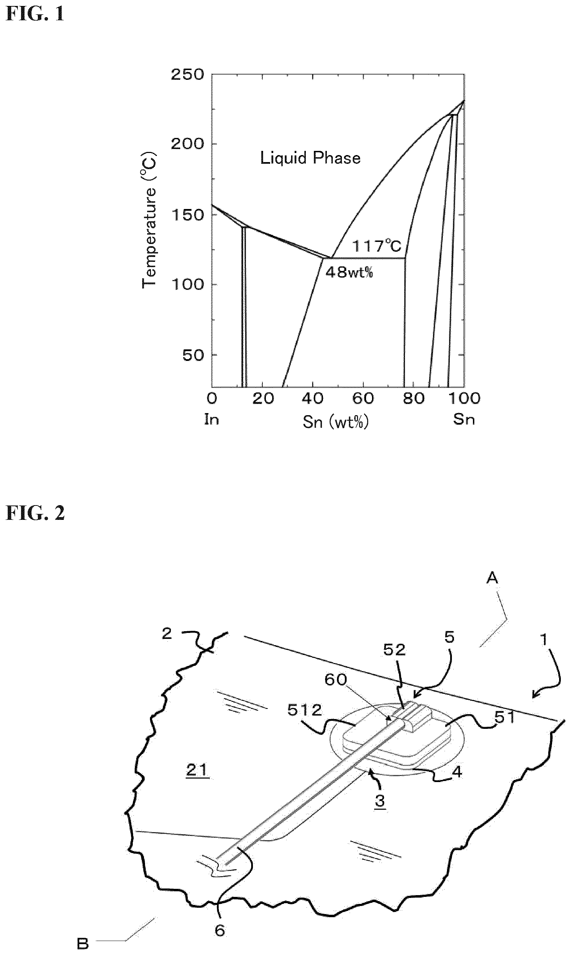

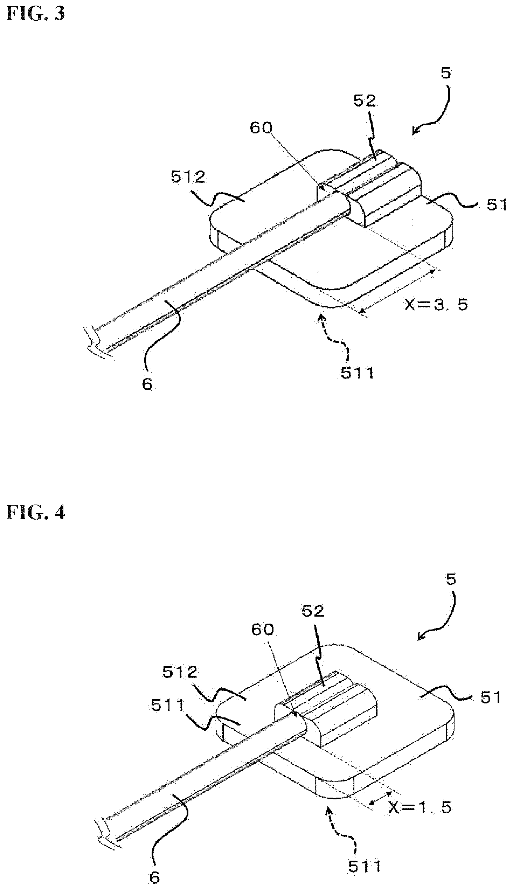

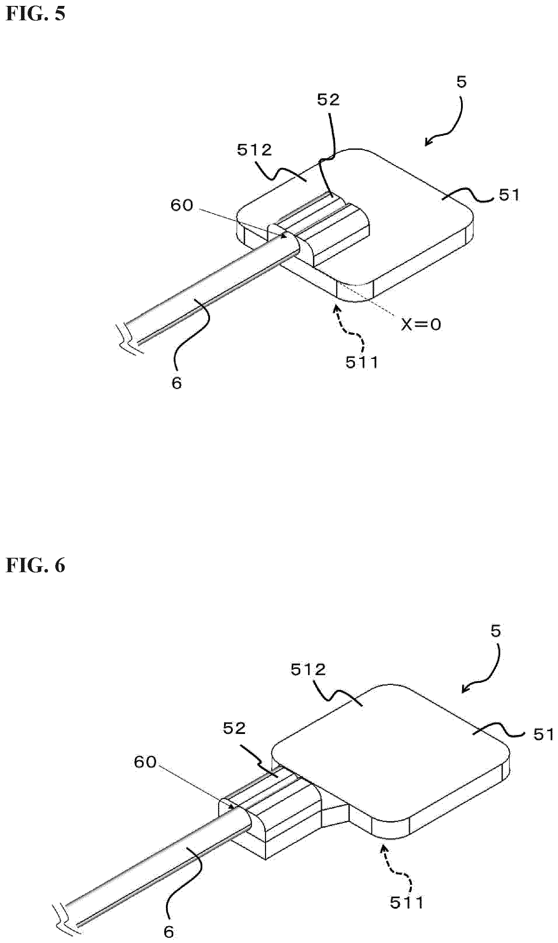

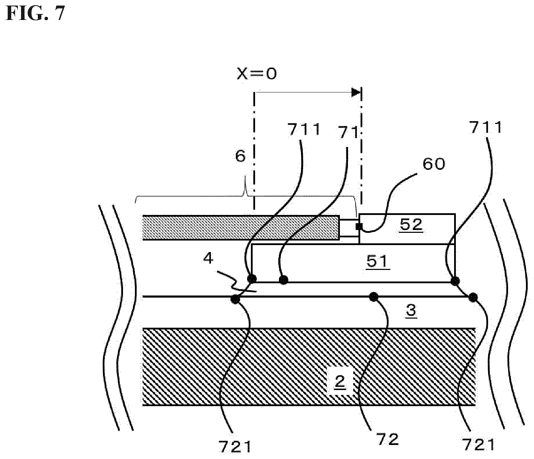

FIG. 2 is a schematic view of a main part of a vehicle window glass assembly 1 according to one typical embodiment of the present disclosure; FIG. 3 is a detailed schematic view of a typical example of a connection terminal for use in the vehicle window glass assembly 1; FIG. 4 is a schematic view of a connection terminal according to a derivative example of the present disclosure; FIGS. 5 and 6 are schematic views of connection terminals according to comparative examples out of the scope of the present disclosure; and FIG. 7 is a schematic cross-sectional view of the vehicle window glass assembly as taken along line A-B of FIG. 2.

As shown in FIG. 2, the vehicle window glass assembly 1 includes: a vehicle window glass pane 2 with a conductor layer 3 of predetermined pattern formed on a glass main surface 21 of the glass pane 2; a solder layer 4 made of an indium-containing lead-free solder; a connection terminal 5 connected to the conductor layer 3 via the solder layer; and a power line 6 fixed to the connection terminal. In FIG. 2, a line extending in a lower left direction from the circular conductor layer 3 is also regarded as a part of the conductor layer 3.

As shown in FIG. 3, the connection terminal 5 includes: a metal plate 51 having a first main surface 511 and a second surface 512 located opposite to the first main surface; and a fixing part 52 that fixes the power line 6. The first main surface 511 is adapted as a joint area for the solder layer 4. The fixing part 52 is provided on the second main surface 512. As shown in FIG. 7, a first joint region 71 is defined between the solder layer 4 and the first main surface 511. A periphery of the first joint region 71 is defined as an edge 711. Further, a second joint region 72 is defined between the solder layer 4 and the conductor layer 3. A periphery of the second joint region 72 is defined as an edge 721.

As shown in FIGS. 2 to 4, the power line 6 extends from the fixing part 52. A portion of the power line 6, other than the portion thereof fixed by the fixing part 52, is released free from the connection terminal 5, without being fixed to the connection terminal 5. As shown in the cross-sectional view of FIG. 7, a starting point 60 of the power line 6 extending from the fixing part 52 is situated at a location above a region inside the edge 711 of the joint region 71 defined by the solder layer 4 and the first main surface 511. Herein, the term "above" refers to the direction perpendicularly away from the glass main surface 21. Further, the position of a point above the edge 711 is defined as "X = 0" (see FIG. 7). In FIG. 7, a location extending from the point "X = 0" in the direction indicated by an arrow, but not including the point "X = 0", corresponds to the location above the region inside the edge 711.

FIG. 5 shows a connection terminal according to a first comparative example, in which a starting point 60 of a power line 6 is situated above the point "X = 0". FIG. 6 shows a connection terminal according to a second comparative example, in which a fixing part 52 is disposed outward of the metal plate 51 so that a starting point 60 of a power line 6 is situated outward of a point "X = 0".

Since the portion of the power line 6 extending from the fixing part 52 is released free from the connection terminal 5, there may occur a mode in which the power line 6 is pulled from a direction perpendicular to the metal plate 51. Among various tensile modes, this mode is a mode where the highest tensile stress is applied to the solder layer 4. Although a heat soak test defined by the VDA includes a mode in which the power line 6 is pulled from a direction perpendicular to the second main surface 512, the above-structured vehicle window glass assembly 1 according to the present embodiment attains a quality enough to pass the heat soak test defined by the VDA.

During the formation of the solder layer 4, it is preferable to press the connection terminal 5 against the main surface 21 of the glass pane in a state that the solder in a molten state is sandwiched between the conductor layer 3 and the first main surface 511. With this, the vehicle window glass assembly is so structured that: the first joint region 71 is smaller than the second joint region 72 between the solder layer 4 and the conductor layer 3; and the edge 711 of the first joint region 71 is situated above a region inside the edge 721 of the second joint region 72. The area of the first joint region 71 may be, for example, 0.85 to 0.95 times as large as the area of the second joint region 72. In order to make the solder joint structure of the connection terminal 5, the solder layer 4 and the conductor layer 3 compact, it is preferable that the first joint region 71 ranges over the whole of the first main surface 511.

The joining of the conductor layer 3 and the first main surface 511 of the connection terminal 5 via the solder layer 4 is implemented by supplying heat from any of various heat sources to the vicinity of the solder joint. As the heat source, there can be used a conventionally known soldering iron, hot air or resistance welding. More specifically, the lead-free solder is melted and applied in advance to the first main surface 511 of the connection terminal 5. The joining is then implemented by, in a state that the first main surface 511 of the connection terminal 5 is pressed against the glass main surface 21, holding a soldering iron whose iron tip temperature is set to 200 to 300°C in contact with the second main surface 512 of the connection terminal 5 or energizing and heating the metal plate 51.

For more secure joining of the conductor layer 3 and the connection terminal 5, the area of the joint region between the conductor layer 3 and the solder layer 4 may be 36 mm² to 64 mm², preferably 38 mm² to 50 mm². Furthermore, the area of the first main surface 511 of the metal plate 51 may be 36 mm² to 64 mm², preferably 38 mm² to 50 mm². The metal plate 51 may have a regular or substantially regular polygonal shape, a circular shape or an elliptical shape to easily ensure the required solder joint area. In the case where the metal plate has a regular polygonal or substantially regular polygonal shape, the respective corners of the polygonal shape may be rounded into an arc. Furthermore, the metal plate 51 may be formed with a cut-out portion.

It is further preferable that the starting point 60 is situated above a center-of-gravity portion of the joint region 71. Herein, the center-of-gravity portion refers to a portion ranging up to an edge of the center of gravity and may preferably be defined as a portion within a 4-mm radius of the center of gravity. In this configuration it is possible, even when the power line 6 is pulled, to distribute more securely the stress applied to the connection terminal 5.

The glass pane 2 has the glass main surface 21 and a glass end surface. For use in a vehicle window, the glass pane 2 may be formed in a curved shape. The glass pane 2 may have an area according to the shape of the vehicle. The thickness of the glass pane 2 is not particularly limited and is appropriately selected within the range of 0.3 mm to 6 mm. As the material of the glass pane 2, there can be used a soda lime glass as specified in ISO 16293-1. The glass assembly 1 according to the present embodiment satisfies a heat soak test defined by the VDA and a heat cycle test as verified by the after-mentioned Examples even when the glass pane 2 is made of a non-reinforced glass. Thus, a non-reinforced glass can be used as the material of the glass pane 2. The glass pane 2 may be made of a laminated glass material containing a non-reinforced glass. Not only a non-reinforced glass, but also a thermally tempered glass, a chemically-strengthened glass and the like, are usable as the material of the glass pane 2.

The term "non-reinforced glass" as used in the present disclosure refers to a glass having at a surface thereof a compressive stress of 50 MPa or less, by being bent by heating in a furnace and then cooled according to a temperature profile in the heating furnace, or a glass having no compressive stress at a surface thereof.

As to the heat cycle test, it is preferable that the glass assembly passes a heat cycle test defined by the Verband der Automobilindustrie (VDA) according to "DIN EN ISO16750-4-H Section 5.3.1.2". The heat cycle test defined by the VDA is done by placing the solder joint in an environment of temperature cycles (60 cycles in total) of -40°C to 105°C and applying a voltage of 14 V to the conductor layer during the steps of temperature rise and holding at 105°C.

The conductor layer 3 is formed in a wiring pattern depending on its use as an antenna, a heating element or the like, and is provided with a busbar and connection terminal portion for electrical connection to the connection terminal 5. Preferably, the conductor layer 3 is made of a sintered body of silver or silver alloy and glass frit. More specifically, the sintered body is obtained by mixing particles of silver or silver alloy with a glass frit and an organic oil to prepare a so-called silver paste, applying the silver paste to the glass main surface 21 by screen printing etc. and subjecting the applied paste to heating at 500 to 700°C.

The vehicle window glass assembly 1 may additionally include a color ceramic layer, of e.g. black color, between the conductor layer 3 and the glass main surface 21. The color ceramic layer is preferably made of a sintered body of pigment and glass frit. More specifically, the color ceramic layer is obtained by mixing particles of pigment with a glass frit and an organic oil to prepare a so-called color ceramic paste, applying the color ceramic paste to the glass main surface 21 by screen printing etc. and subjecting the applied paste to heating at 500 to 700°C.

As mentioned above, the solder layer 4 is made of indium-containing lead-free solder. The lead-free solder is a non-eutectic In-Sn alloy containing indium as a predominant component and, more specifically, containing up to 74 mass% indium and 3 mass% to 9 mass% silver, and having a solidus temperature of 120°C or higher.

It is a precondition of the present embodiment that the solidus temperature of the alloy is 120°C or higher, as in Patent Document 6.

FIG. 1 is an alloy phase diagram of an In-Sn solder (as excerpted from I. Isomaeki, M. Haemaelaeinen, W. Gierlotka, B. Onderka and K. Fitzner, J. Alloys Compd., 422[1-2], 173-177 (2006)). According to the alloy phase diagram, an alloy containing indium as a predominant component, when being in the form of a eutectic alloy, shows a solidus temperature of lower than 120°C at its eutectic point. (In the case of an alloy having a eutectic composition containing 52 mass% of indium and the balance being tin, for example, the solidus temperature of the alloy at the eutectic point is 117°C.). When the solidus temperature of the alloy is controlled to 120°C or higher by the addition of any other meal component to the alloy, it becomes for the alloy difficult to maintain flexibility which is an advantage of the indium-containing lead-free solder. An indium-tin alloy shows a solidus temperature of 120°C or higher in a non-eutectic region where the indium content is higher than the eutectic point composition of 52 mass% In.

In the alloy, silver is contained in an amount of 3 mass% to 9 mass% to prevent the silver in the conductor layer 3 from being incorporated into the solder layer and to increase the joint strength of the solder j oint. It is hence a precondition of the present embodiment that silver is contained in the alloy.

By satisfaction of only the above-mentioned preconditions, however, the vehicle window glass assembly 1 is not able to pass the heat soak test defined by the VDA even though the starting point of the power line 6 extending from the fixing part 52 is situated above the region inside the edge 711 of the first joint region 71 between the solder layer 4 and the first main surface 511. The reason for this is assumed to be that, since indium contained in the alloy is a soft material, creep fatigue is likely to occur in the solder layer 4 when the solder layer 4 is held under a high-temperature environment during the heat soak test. Thus, indium is contained in an amount of up to 74 mass% in the alloy in the present embodiment. The vehicle window glass assembly 1 consequently achieves sufficient quality to pass the heat soak test defined by the VDA.

While an In-Sn alloy has a eutectic point at a composition of 52.0 mass% In and 48.0 mass% Sn, the non-eutectic In-Sn alloy used in the present embodiment has a higher In content than that of the eutectic composition. As mentioned above, it is considered that creep fatigue is likely to occur in the solder layer 4 when the indium content of the alloy is too high. In consideration of this, the upper limit of the indium content of the alloy is preferably set to 74 mass%, more preferably 70 mass%. Further, the lower limit of the indium content of the alloy is preferably set to 65 mass%, more preferably 67 mass%.

The In-Sn alloy may optionally contain a fourth component such as antimony, copper, nickel or zinc in an amount of 0 mass% to 2 mass%, preferably 0 mass% to 1.5 mass%, in order to maintain the flexibility which is an advantage of an indium-containing lead-free solder. In the alloy, the balance other than the above-mentioned metal components is tin and inevitable impurities. Herein, the inevitable impurities refer to any components other than the above-mentioned components, and are contained in an amount of 0.1 mass% in the alloy.

It is said that the result of the heat soak test is influenced by the silver content of the alloy. For the purpose of reducing quality variations between products in the process of industrial production of the vehicle window glass assembly 1, the lower limit of the silver content of the alloy may be set to 5 mass%, preferably 5.5 mass%; and the upper limit of the silver content of the ally may be set to 8 mass%, preferably 7 mass%.

The metal plate 51 can be a plate made of copper, zinc, iron, nickel, tin, cobalt or chromium, or a plate made of an alloy containing two or more elements selected from these metal elements. In terms of conductivity and ease of processing, it is generally preferable that the metal plate is made of a material good in conductivity and easy to machine, such as copper or brass.

There is a case that the result of the heat soak test is influenced by the thickness of the metal plate 51. In consideration of such a case, the thickness of each part of the metal plate 51 may be set to 0.3 mm to 2.0 mm, preferably 0.5 mm to 1.0 mm. The thickness of the respective parts of the metal plate 51 may be the same.

The fixing part 52 for fixing of the power line 6 is provided on the second main surface 512, and is of any size to fix the end portion of the power line 6 in front of the starting point 60 (hereinafter referred to as the "front end portion"). As shown in FIG. 2, the fixing part 52 can be so structured as to be crimped onto the front end portion of the power line 6. Alternatively, the fixing part can be structured to fix the front end portion of the power line by brazing with a brazing material or by welding such as resistance welding. A B-crimp is known as a typical example of fixing part structure for crimping onto the front end portion of the power line 6.

The power line 6 extends along the glass main surface 21. As the material of the power line 6, there can be used a material having a low electrical resistance, such as copper, aluminum or the like. Preferred is copper which is higher in electrical resistance and low in cost. The power line may be provided with an insulating coating. Examples of the insulating coating are those having heat resistance at an intended use temperature or higher, such as those made of vinyl chloride, heat-resistant PVC etc. The diameter of the power line can be set such that an electric current assumed to pass through the heating wire formed on the main surface of the vehicle window glass pane becomes smaller than or equal to an allowable current of the power line. However considering the flexibility of the power line, the diameter of the power line is preferably 0.3 sq (AWG: 22) to 2.0 sq (AWG: 14).

In the vehicle window glass assembly 1, there is a case that a tensile stress is applied to the connection terminal 5, or to the solder joint between the connection terminal 5 and the conductor layer 3, due to the power line 6. The vehicle window glass assembly 1 according to the present embodiment is so structured that: the starting point 60 of the power line 6 is situated above the region inside the edge 711 of the first joint region 71 between the solder layer 4 and the first main surface 511; and the portion of the power line 6 other than the portion thereof fixed by the fixing part 52 is released free from the connection terminal 5 without being fixed to the connection terminal 5, whereby tensile stress, even when caused by the power line 6, is applied to the center-of-gravity portion of the solder layer 4. Thus, the stress is uniformly exerted on the solder joint structure of the connection terminal 5, the solder layer 4 and the conductor layer 3 so that it is possible to prevent strong stress from being locally generated in the solder joint structure. The vehicle window glass assembly 1 according to the present embodiment is therefore advantageous in that the solder joint between the connection terminal 5 and the conductor layer 3 ensures good durability against the tensile stress or sustained load.

### EXAMPLES

The present disclosure will be described in more detail below by way of the following examples.

### Example 1

A glass pane 2 was provided, made of a soda lime glass (non-reinforced glass with a general car window size having a thickness of 2 mm) by a float method. A black ceramic paste was applied to a main surface of the glass pane 2 by screen printing and then dried. After that, a silver paste was applied to the ceramic paste in a predetermined heating wire circuit pattern layer by screen printing and then dried. The glass pane 2 to which the black ceramic paste and the silver paste were applied was heat-treated, thereby forming a conductor layer 3 on the glass main surface 21.

A connection terminal 5, formed from a nickel-plated copper metal plate, was provided. In the present Example, the connection terminal 5 had a shape as shown in FIG. 3. In this connection terminal 5 the metal plate 51 was 0.8 mm in thickness. Further, the metal plate 51 was rectangular-shaped having first and second main surfaces on opposite sides. Each of the first and second main surfaces was 49 mm² in area.

A B-crimp type fixing part 52 of the connection terminal was disposed on the second main surface 512. A longitudinal direction of the fixing part 52 was in a perpendicular relation to one side of the metal plate 51 such that a starting point of the fixing part 52 in the longitudinal direction was located on the one side of the metal plate and such that an end point of the fixing part 52 in the longitudinal direction was located on a center portion of the metal plate 51. In the present Example, the center portion of the metal plate was situated above a center-of-gravity portion of the solder layer 4.

A power line 6, formed from a copper wire having a diameter of 2.1 mm and coated with vinyl chloride, was provided. A portion of the power line 6 where the copper wire was exposed was fixed to the fixing part 52. When the connection terminal 5 was soldered to the conductor layer 3, the longitudinal direction of the fixing part 52 was in a perpendicular relation to an end surface 22 of the glass pane 2. The fixing part was crimped onto the power line 6 so that the power line extended along the glass main surface 21 in a direction toward the glass end surface 22.

Then, 0.2 g of a lead-free solder was soldered to the first main surface. The lead-free solder used was formed of a non-eutectic alloy containing 68 mass% of indium, 23 mass% of tin, 6 mass% of silver, 1 mass% of antimony, 1 mass% of copper and 1 mass% of zinc and having a solidus temperature of 124°C.

The connection terminal 5 was arranged on the base glass pane such that the solder soldered to the connection terminal 5 was arranged between the connection terminal 3 and the conductor layer 3. Subsequently, a solder layer 4 was formed by remelting the solder through energization heating of the connection terminal 5. With this, there was obtained a sample simulating the vehicle window glass assembly 1. In the obtained sample, the solder layer 4 was joined and adhered to the whole of the first main surface. Further, the distance from the point of the edge 71 (X = 0) to the starting point 60 of the power line 6 was set to x = 3.5 mm.

The sample obtained in the present Example showed satisfactory results in the heat soak test and heat cycle test defined by the VDA.

### Example 2

A sample simulating the vehicle window glass assembly 1 was obtained by the same procedure as in Example 1, except that the connection terminal 5 had a shape as shown in FIG. 4, and the distance from the point of the edge 71 (X = 0) to the starting point 60 of the power line 6 was set to x = 1.5 mm. The sample obtained in the present Example showed satisfactory results in the heat soak test and heat cycle test. Herein, the structural difference between Examples 1 and 2 was only the distance from the point of the edge 71 (X = 0) to the starting point 60 of the power line 6, due to a difference in the position of the fixing part 52.

### Example 3

A sample simulating the vehicle window glass assembly 1 was obtained by the same procedure as in Example 1, except that the connection terminal 5 had a shape as shown in FIG. 3, and 0.2 g of a lead-free solder, formed of a non-eutectic alloy containing 68 mass% of indium, 26 mass% of tin and 6 mass% of silver and having a solidus temperature of 121°C, was soldered to the first main surface. The sample obtained in the present Example showed satisfactory results in the heat soak test and heat cycle test.

### Example 4

A sample simulating the vehicle window glass assembly 1 was obtained by the same procedure as in Example 1, except that the connection terminal 5 had a shape as shown in FIG. 3, and 0.2 g of a lead-free solder, formed of a non-eutectic alloy containing 68 mass% of indium, 23 mass% of tin and 9 mass% of silver and having a solidus temperature of 121°C, was soldered to the first main surface. The sample obtained in the present Example showed satisfactory results in the heat soak test and heat cycle test.

### Example 5

A sample simulating the vehicle window glass assembly 1 was obtained by the same procedure as in Example 1, except that the connection terminal 5 had a shape as shown in FIG. 3, and 0.2 g of a lead-free solder, formed of a non-eutectic alloy containing 68 mass% of indium, 29 mass% of tin and 3 mass% of silver and having a solidus temperature of 120°C, was soldered to the first main surface. The sample obtained in the present Example showed satisfactory results in the heat soak test and heat cycle test.

### Comparative Example 1

A sample simulating the vehicle window glass assembly 1 was obtained by the same procedure as in Example 1, except that the connection terminal had a shape shown in FIG. 5, and the starting point 60 of the power line 6 was situated above the edge 711 (X = 0). The sample obtained in the present Comparative Example did not show a satisfactory result in the heat soak test. Herein, the structural difference between Example 1 and Comparative Example 1 was the position of the fixing part 52. The sample obtained in Comparative Example 1 did not satisfy the precondition that the starting point of the power line extending from the fixing part should be situated above the region inside the edge of the first joint region defined by the solder layer and the first main surface.

### Comparative Example 2

A sample simulating the vehicle window glass assembly 1 was obtained by the same procedure as in Example 1, except that the connection terminal had a shape as shown in FIG. 6. The thus-obtained sample did not satisfy the above-mentioned precondition as in the case of Comparative Example 1. The sample obtained in the present Comparative Example did not show a satisfactory result in the heat soak test.

### Comparative Example 3

A sample simulating the vehicle window glass assembly 1 was obtained by the same procedure as in Example 1, except that the connection terminal 5 had a shape as shown in FIG. 3, and 0.2 g of a lead-free alloy, formed of a non-eutectic alloy containing 75 mass% of indium, 15 mass% of tin, 6 mass% of silver, 1 mass% of antimony, 1 mass% of copper, 1 mass% of zinc and 1 mass% of nickel and having a solidus temperature of 130°C, was soldered to the first main surface. The sample obtained in the present Comparative Example did not show a satisfactory result in the heat soak test. Herein, the only structural difference between Example 1 and Comparative Example 3 was the alloy composition of the solder layer 4.

### Comparative Example 4

A sample simulating the vehicle window glass assembly 1 was obtained by the same procedure as in Example 1, except that the connection terminal 5 had a shape as shown in FIG. 3, and 0.2 g of a lead-free alloy, formed of a non-eutectic alloy containing 69 mass% of indium, 29 mass% of tin and 2 mass% of silver and having a solidus temperature of 120°C, was soldered to the first main surface. The sample obtained in the present Comparative Example did not show a satisfactory result in the heat soak test. Herein, the structural difference between Example 1 and Comparative Example 4 was also only the alloy composition of the solder layer 4.

As described above, vehicle window glass assemblies 1 according to the embodiments of the present disclosure, in which the solder joint 4 is made of indium-containing lead-free solder to join the connection terminal 5 connected to the power line 6 and the conductor layer 3 formed on the glass main surface 21, and the solder joint 4 between the connection terminal 5 and the conductor layer 3 is provided at one location on the connection terminal 5, achieve sufficient quality to pass both the heat cycle test and the heat soak test defined by the VDA.

### Description of Reference Numerals

- 1:: Vehicle window glass assembly
- 2:: Vehicle window glass pane
- 21:: Glass main surface
- 3:: Conductor layer
- 4:: Solder layer
- 5:: Connection terminal
- 51:: Metal plate
- 511:: First main surface
- 512:: Second main surface
- 52:: Fixing part
- 6:: Power line
- 60:: Starting point of power line
- 71:: First joint region
- 711:: Edge of first joint region
- 72:: Second joint region
- 721:: Edge of second joint region

## Claims

1. A vehicle window glass assembly, comprising:
a vehicle window glass pane with a silver-containing conductor layer of predetermined pattern formed on a glass main surface of the glass pane;
a solder layer made of a lead-free solder containing indium;
a connection terminal connected to the conductor layer via the solder layer; and
a power line fixed to the connection terminal,
wherein the connection terminal comprises a metal plate, having a first main surface joined to the solder layer and a second main surface located opposite to the first main surface, and a fixing part that fixes the power line to the second main surface,
wherein the power line extends from the fixing part,
wherein a starting point of the power line extending from the fixing part is situated above a region inside an edge of a first joint region defined by the solder layer and the first main surface, and
wherein the lead-free solder is a non-eutectic In-Sn alloy containing indium as predominant component, comprising 65 mass% to 74 mass% of indium, 3 mass% to 9 mass% of silver and 0 mass% to 2 mass% of each of antimony, copper, nickel and zinc, with the balance being tin and inevitable impurities, and has a solidus temperature of 120°C or higher.

2. Vehicle window glass assembly according to claim 1, wherein the non-eutectic In-Sn alloy comprises 67 mass% to 70 mass% of indium, 5 mass% to 9 mass% of silver and 0 mass% to 1 mass% of each of antimony, copper, nickel and zinc, with the balance being tin and inevitable impurities, and has a solidus temperature of 120°C or higher.

3. Vehicle window glass assembly according to claim 1 or 2, wherein the alloy comprises 5 mass% to 9 mass% of silver.

4. Vehicle window glass assembly according to any one of claims 1 to 3 wherein the first joint region is smaller than a second joint region defined by the solder layer and the conductor layer, and wherein the edge of the first joint region is situated above a region inside an edge of the second joint region.

5. Vehicle window glass assembly according to any one of claims 1 to 4 wherein the first joint region extends over the whole of the first main surface.

6. Vehicle window glass assembly according to any one of claims 1 to 5 wherein the starting point of the power line extending from the fixing part is situated above a center-of-gravity portion of the joint region defined by the solder layer and the first joint surface.

7. Vehicle window glass assembly according to any one of claims 1 to 6 wherein the power line is fixed to the fixing part by crimping, brazing or welding.

8. Vehicle window glass assembly according to any one of claims 1 to 7 wherein the metal plate has a regular polygonal or substantially regular polygonal shape, a circular shape or an elliptical shape.

9. Vehicle window glass assembly according to any one of claims 1 to 8 wherein the metal plate has a thickness of 0.3 mm to 2.0 mm.

10. Vehicle window glass assembly according to any one of claims 1 to 9 wherein the glass pane is of non-reinforced glass.
